Europäisches Patentamt

European Patent Office

Office européen des brevets

(11) Publication number: **0 021 690**
**B1**

(12) **EUROPEAN PATENT SPECIFICATION**

(45) Date of publication of patent specification: **19.12.84**

(21) Application number: **80301919.9**

(22) Date of filing: **06.06.80**

(51) Int. Cl.³: **C 08 L 67/06**

(54) Method for the preparation of curable solid polyester resin pellets.

| | |
|---|---|
| (30) Priority: **11.06.79 US 47330** | (73) Proprietor: **PREMIX, INC.**<br>**P.O. Box 281**<br>**North Kingsville Ohio 44068 (US)** |
| (43) Date of publication of application:<br>**07.01.81 Bulletin 81/01** | (72) Inventor: **Collister, Jon Edward**<br>**P.O. Box 312 Allen Road**<br>**Austinburg Ohio 44010 (US)** |
| (45) Publication of the grant of the patent:<br>**19.12.84 Bulletin 84/51** | |
| (84) Designated Contracting States:<br>**AT BE CH DE FR GB IT LI LU NL SE** | (74) Representative: **Lambert, Hugh Richmond et al**<br>**D. YOUNG & CO. 10 Staple Inn**<br>**London, WC1V 7RD (GB)** |
| (56) References cited:<br>**US-A-3 631 217**<br>**US-A-3 879 318** | |
| **The file contains technical information**<br>**submitted after the application was filed and**<br>**not included in this specification** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of preparing free-flowing curable solid polyester resin moulding compositions in pellet form.

Various theremosettable polyester compositions are known which, when molded, exhibit desirable mechanical and electrical properties. Polyester resins are widely used in molding applications in liquid form. Such liquid resins comprise a liquid solution of a liquid or solid polyester dissolved in a liquid cross-linking agent such as, for example, styrene. However, for many types of molding applications, it is desirable that the polyester resin be in solid form, for example, in the form of sheets, granules or powders.

Solid forms of polyester resin have been prepared from liquid polyester resin solutions of the type mentioned above. For example, a normally liquid polyester resin solution can be converted into a solid form by the addition thereto of a chemical thickening agent such as an oxide or hydroxide of magnesium or calcium. Alternatively, the liquid polyester resin solution can be converted into a solid form by adding thereto a solid filler, such as calcium carbonate which absorbs the liquid resin. For example, a doughy mass or other form of solid resin can be obtained by adding sufficient filler to the liquid resin as disclosed in U.S. Patent No. 2,632,751.

These well known methods for converting liquid polyester resins to solid forms are not totally satisfactory for certain molding processes, more particularly injection molding. For example, the tough, rubbery sheets that are produced from a chemically thickened polyester resin cannot be satisfactorily ground into pellets or powders which is a desirable form of the curable resin for a molding operation such as by screw injection molding.

Another disadvantage in relying on the use of fillers to absorb sufficient amounts of a liquid resin containing an amorphous polyester in order to provide a solid resinous composition is that the properties of the articles made from the cured composition can be affected adversely. For example, when high proportions of filler are used to thicken the composition, the strength of the articles made therefrom generally is reduced.

U.S. Patent No. 3,431,320 describes a process for increasing the viscosity of unsaturated polyester resins dissolved in an ethylenically unsaturated copolymerizable monomer by adding a mixture of calcium oxide and either calcium hydroxide or magnesium oxide to the polyester resin. It is reported that these compounds initially inhibit the viscosity build-up which permits application of the polyester resin to fiber substrate prior to thickening. U.S. Patent No. 2,568,331 describes copolymers of styrene and unsaturated polyesters and the conversion of such copolymers to solid polymers utilizing an organic peroxide in combination with an alkaline earth metal oxide or hydroxide.

U.S. Patent No. 2,628,209 describes the use of liquid mixtures of polymerizable vinyl compounds and polyolefinic alkyds containing free radical catalysts and magnesium oxide for impregnating or application to absorptive or porous sheet materials. After the sheet materials are treated, the magnesium oxide reacts causing the viscosity to increase. Thus when the impregnated fabric is heated for curing, the viscosity remains high enough so that the resin does not run off. Alternatively, liquid polymerizable resins of high viscosity can be prepared by mixing low viscosity resin with pigments, dyes, catalysts, etc., and thereafter adding magnesium oxide to thicken the mixture.

U.S. Patent No. 3,959,209 describes the preparation of solid, curable crystalline polyester resin compositions which does not depend upon chemical thickening agents. Amorphous polyesters can be utilized in combination with the crystalline polyester.

U.S. Patent No. 3,926,902 describes thermoset compositions which are dry and free-flowing. The composition comprises a mixture of an unsaturated thermosetting polyester, a polymerizable cross-linking agent, a free-radical initiator and a filler material and/or reinforcing agent selected from organic and inorganic fibers. The polyesters used in the composition are those which normally melt at a temperature above about 65°C.

U.S. Patent No. 3,631,217 describes a process for thickening polyester resins which comprises adding a chemical thickening agent, such as magnesium oxide, to the resin along with 0.1 to 1.0 per cent by weight of water. The presence of water substantially accelerates the thickening process. Primarily the intention is to provide liquid resin composition which can be impregnated into sheet materials such as glass fiber mats and which thicken *in situ* to provide substantially dry solid mouldable polyester resin compositions in sheet form. Conventional premix-type moulding compositions can also be produced by incorporating appropriate fillers into the resin composition. Specifically it is taught that the resin composition shall be impregnated into the reinforcement, or that the fillers shall be incorporated into the resin, while the resin still has a relatively low viscosity, i.e. before any substantial thickening has taken place. To this end, the thickening agent is usually added to the resin formulation after the additional materials, e.g. fillers etc. have been blended into the resin, or shortly before impregnation of the resin into the reinforcement.

Similar dry polyester compositions are disclosed in U.S. Patent No. 3,879,318 utilizing a chemical thickening agent, such as magnesium oxide, in combination with an organic amide as a thickening accelerator. Again it is taught that the thickening agent is added to the resin blend immediately before the processing steps so that the composition will remain fluid for the length of time required for processing.

Whilst the above-mentioned methods are oprable to produce dry, solid polyester moulding compositions in sheet or bulk form the applicant has found that such methods are not amenable to the provision of polyester moulding compositions in free-flowing, pellet form.

In contrast, in accordance with the present invention it has been found that such compositions can be provided in free-flowing storage-stable pellet form by an essentially three stage process in which the chemical thickening agent, and thickening accelerator, if used, is or are first added to the polyester resin, or a mixture of the polyester resin and the cross-linking monomer, and the mixture thus formed allowed to interact to form a thickened composition having a characteristic plateau region in its viscoelastic spectrum. The initiator and any other additional components, such as fillers etc., are then added to the pre-thickened composition and blended therein under conditions of high shear to form an extrudable mixture which is then extruded into pellets or granules.

Accordingly, the present invention provides a method of preparing heat-curable, solid polyester resin compositions which are in dry, storage-stable, free-flowing pellet form and which comprise a mixture of an amorphous unsaturated polyester resin and a cross-linking monomer containing a terminal ethylenically unsaturated group thickened by reaction with an alkaline earth metal oxide or hydroxide and containing a free radical polymerisation initiator, said compositions optionally also containing one or more of the following:

a filler, fibrous reinforcement pigment, shrinkage resisting thermoplastic polymer or a mould release agent, characterised by the steps of a) adding the alkaline earth metal oxide or hydroxide thickening agent to the polyester resin, or to a mixture of the polyester resin and the cross-linking monomer, prior to the addition of said initiator and said optional ingredient(s), if used, to form a liquid composition containing the polyester resin, the thickening agent and, optionally said cross-linking monomer, b) allowing the liquid composition thus formed to stand until such time as the polyester resin and thickening agent coreact to provide a thickened liquid composition which is characterised by a plateau region in its viscoelastic spectrum; c) mixing the polymerisation initiator, optional ingredients, if any, and cross-linking monomer, if not already present, with the thickened liquid composition by high shear blending to provide an extrudable mixture; and d) extruding the mixture produced in step c) whilst still in the extrudable state through a pelletizing die.

In one embodiment of the invention, the unsaturated polyester resin and the cross-linking monomer are premixed and then thickened by the addition of the thickening agent. In an alternative embodiment, the polyester resin is not initially contacted with the monomeric unsaturated polymerizable material. In this alternative embodiment, the polyester resin, if a liquid, is mixed with the alkaline earth metal oxide or hydroxide, and after undergoing thickening, the unsaturated material containing the terminal ethylene group is added to the thickened polyester resin along with other desirable ingredients such as polymerization initiators. When the starting polyester resin is a low melting point solid, the alternative embodiment comprises mixng the alkaline earth metal oxide or hydroxide with a melted polyester resin, and after heating the fluid mixture to obtain the desired increase in viscosity. The unsaturated polymerizable monomer containing a terminal ethylene group and other desirable components thereafter are dispersed into the thickened polyester resin.

Unsaturated polyester resins which are useful in the method of the invention are well known in the art. The unsaturated polyesters are condensation polymers derived by the condensation of unsaturated dibasic acids or anhydrides with di-hydroxy compounds. The polyesters may include in the polymeric chain, varying proportions of other saturated or aromatic dibasic acids and anhydrides which are not subject to cross-linking. The particular non-cross-linking components and their properties will depend upon the desired properties of the final products. Independent of the composition of the polyester resin, the polyesters should be prepared in a manner such that the polyesters have an acid number of between about 10 and 100. This acid functionality is used to react with the alkaline earth oxides and hydroxides to produce the desired increases in molecular weight and viscosity.

Examples of unsaturated dibasic acids or anhydrides which are utilized in the formation of the polyester resins include maleic acid, fumaric acid, itaconic acid, tetrahydrophthalic anhydride, etc. Examples of saturated aliphatic dicarboxylic acids include adipic and succinic acids, and examples of aromatic dicarboxylic acids include phthalic acid, isophthalic acid, terephthalic acid and halogenated derivatives such as tetrachlorophthalic acid and anhydride.

Examples of di-hydroxy and tri-hydroxy compounds include ethylene glycol, propylene glycol, 1,2-butanediol, 1,3-butanediol, 1,4-butanediol, diethylene glycol, dipropylene glycol, glycerol, neopentyl glycol, and reaction products of alkylene oxides with, for example, 2,2'-bis(4-hydroxy phenylene)propane, (Bisphenol A).

The polyesters are prepared by reacting the one or more dibasic acids or anhydrides with the di- or tri-hydroxy compounds in approximately equal proportions. Examples of such polyesters include: maleic anhydride and propylene glycol (1:1 molar ratio); isophthalic acid, maleic anhydride and propylene glycol (1:2:3 and 1:1:2 molar ratios); and adipic acid, maleic anhydride and proplyene glycol (1:2:3 molar ratio). The degree of polymerization of polyester resins is conveniently measured with respect to the acid end groups. One gram of the polyester resin is titrated with potassium hydroxide, and the number of milligrams of potassium hydroxide necessary to neutralize the gram of polyester is called the acid number. It is preferred for purposes of this invention that the acid number of the polyester resin utilized in the method be below 100, and is generally between about 10 and 100. Moreover, the polyester resins utilized in the method of the invention are characterized as being amorphous polyesters. A wide variety of such polyester resins is available commercially from various sources.

In one embodiment of the present invention, the unsaturated polyester is dissolved in at least one monomeric unsaturated polymerizable material containing a terminal ethylene group. Preferably, the terminal ethylene group is attached to an electronegative group such as the phenyl group as in styrene, halogen as in vinyl chloride, the acetoxy group as in vinyl acetate or the carbethoxy group as in ethyl acrylate. Examples of such compounds include styrene, alpha-methyl styrene, chloro styrene, vinyl toluene, divinyl benzene, diallylphthalate, methyl methacrylate, etc. The particular monomeric unsaturated polymerizable material selected for use in the method of the invention should be a material which is capable of dissolving the polyester resin, preferably at room temperature. The amount of unsaturated monomer such as styrene or vinyl toluene included in the mixture generally is from about 10 to about 60% and preferably from about 30 to about 50% by weight of the mixture of monomer and polyester. Alternatively, the liquid mixture of polyester resin and vinyl monomer will contain from about 3 to 5 parts by weight of the monomer for each 10 parts of polyester resin.

To the above described liquid mixture, there is added an alkaline earth metal oxide or hydroxide in an amount effective to provide a desired increase in viscosity on standing. The increase in viscosity should be sufficient to provide a thickened mixture which can be converted to a free-flowing dry pellet by extrusion after addition of polymerization initiator, pigment, mold release agents, etc. The amount of alkaline earth metal oxide or hydroxide required to produce the desired increase in viscosity will vary depending on the particular polyester and polymerizable material containing a terminal ethylene group, but such amount can be determined easily by one skilled in the art. Examples of the alkaline earth oxides which are useful include magnesium oxide, zinc oxide and calcium oxide. The corresponding hydroxides also can be utilized in the method of the invention. In the present invention, magnesium oxide and zinc oxide are preferred. Also in the preferred embodiment, the liquid mixture which is prepared consisting essentially of the unsaturated polyester resin, the unsaturated monomer material, and the alkaline earth metal oxide or hydroxide will contain from 1 to 5% by weight of the alkaline earth metal oxide or hydroxide.

In addition to the above materials, the liquid mixture also may contain water or an organic thickening composition in an amount of up to 5% by weight. Examples of useful thickening agents include organic aldehydes, ketones, alcohols, amines and amides. The preferred amides are acid amides such as formamide. The use of acid amides for increasing the rate of polyester reactions with alkaline earth oxides and hydroxides is described in U.S. Patent No. 3,879,318.

The above described mixtures, with or without the organic accelerator, are allowed to stand until the alkaline earth metal oxide or hydroxide and the polyester co-react thereby providing a desired increase in the viscosity of the mixture. Heat may be applied to the mixture to increase the thickening rate. The desired viscosity is the viscosity which will enable the mixture, after incorporation of a polymerization initiator, to be extruded into dry, free-flowing pellets. The material of desired viscosity which represents an increase of molecular weight can be distinguished from the low molecular weight precursers by the appearance of a plateau region in the viscoelastic spectrum for the higher molecular weight material. The plateau region is non-existent in the viscoelastic spectrum of the precursers. The degree of reaction between the alkaline earth metal oxide or hydroxide with the polyester can be monitored by determining the viscosity rise of the polymer solution, monitoring the increase in relaxation time of the polyester solution, determining the intrinsic viscosity of the resultant resin, or performing molecular weight analysis using standard gel permeation chromatography. The desired degree of reaction or viscosity increase generally is achieved in a matter of hours and is determined by the reactivity of the polyester resin, the type of oxide or hydroxide used, and the presence of any accelerators in the mixture.

Alternatively, the formation of the mixture of polyester resin and alkaline earth metal oxide or hydroxide having the desired increased viscosity can be accomplished in the absence of the monomeric unsaturated polymerizable material. In the alternative embodiment, the metal oxide or hydroxide is introduced to the polyester while the polyester is maintained above its melting point. The temperature of the reaction between the metal oxide or hydroxide and polyester is dependent upon the specific melt temperature of the polyester resin employed. The time of the reaction is considerably shorter than the solvent process described above. Typically, desired levels of reaction can be achieved in a matter of minutes, and typical reaction times generally will be between about 5 and 120 minutes. In this embodiment the amount of alkaline earth metal oxide or hydroxide incorporated into the mother polyester resin will preferably be up to 5% by weight based on the weight of the polyester.

After the polyester resin mixture has been reacted to form an intermediate product having increased viscosity, whether in solution or neat, a polymerization initiator and other desirable additive components are dispersed in the mixture. If the viscous mixture has been prepared utilizing the melt process, one of the materials added to the thickened mixture is an unsaturated polymerizable monomer containing a terminal ethylene group which serves as a cross-linking agent. Any of the unsaturated polymerizable monomers containing a terminal ethylene group described above with respect to the solvent process can be utilized.

After the mixture has been reacted to provide the desired increase in viscosity, a polymerization initiator is dispersed into the thickened mixture. Generally, the initiator will be a free radical initiator capable of generating free radicals that can initiate cross-linking between the monomer containing the terminal ethylene groups and the polyester resin but will not cause any significant cross-linking of the compositions at low temperatures. In other words, the polymerization initiators must be such that they are sufficiently stable at the temperatures at which the pellets and powders of the invention are formed so that the compositions do not prematurely cross-link and become thermoset. Preferably, the polymerization initiators are chosen from materials which contain either a peroxide group or an azo group. Examples of peroxide compounds include t-butyl perbonzoate, t-butyl peroctoate, benzoyl peroxide, t-butyl hydroperoxide, succinic acid peroxide, cumene hydroperoxide and dibenzoyl peroxide. Examples of typical azo compounds which can be utilized include azo-bis-isobutyronitrile and t-butylazo-isobutyronitrile. Generally, amounts of from about 0.5 to about 20% by weight based on the weight of the combined weight of polyester and monomer are utilized in preparing the pellets of the invention.

Other ingredients which may be dispersed into the thickened polyester resin prior to extrusion to obtain special effects include one or more of the following: fillers, fibrous reinforcing materials, pigments, and mold release agents.

Fillers are added to the resin mixture as extenders and to impart such properties as reduction in shrinkage and tendency to crack during curing. Fillers also tend to improve stiffness and heat resistance in molded articles. Examples of fillers that can be utilized in the method of the invention include alumina trihydrate, calcium carbonate, clays, calcium silicate, silica, talcs, mica, barytes, dolomite, solid or hollow glass spheres of various densities.

The particular filler chosen may be dependent upon the cost of such filler, the effect of the filler on mix viscosity and flow properties during extrusion, or the effect that the filler has on properties such as shrinkage, surface smoothness, chemical resistance, flammability and/or the electrical characteristics of the cured molded article. The amounts of filler included in the polyester resin formulation may vary up to about 70% by weight, and the amount preferred for any particular formulation can be determined readily by one skilled in the art. Useful fillers generally will have an average particle size of from about 1 to about 50 microns.

Fibrous reinforcing materials can be added to the polyester resin compositions of the invention for the purpose of imparting strength and other desirable physical properties to the cured products formed therefrom. Examples of fibrous reinforcements that can be utilized include glass fibers, asbestos, synthetic organic fibers such as acrylonitrile, nylon, polyamide, polyvinyl alcohol and polyester fibers, and natural organic fibers such as cotton and sisal. The preferred fibrous reinforcements generally will be glass fibers which are available in a variety of forms including, for example, mats of chopped or continuous strands of glass, glass fibrics, chopped glass and chopped glass strands.

The amount of fibrous reinforcing material included in the compositions of the invention can be varied over a wide range including amounts of up to about 75% although much smaller amounts will be required if any of the above described fillers are included in the formulation. The amount of fibrous reinforcing material to be utilized in any particular formulation can be determined readily by one skilled in the art.

Mold release agents also can be included in the formulations used in the method of the invention, and these are typically zinc, calcium, magnesium and lithium salts of fatty acids. Specific examples of mold release agents include zinc stearate, calcium stearate, magnesium stearate, lithium stearate, calcium oleate, zinc palmitate, etc. Amounts of up to about 5% of the mold release agent, and preferably from about 1 to about 5% of the mold release agent can be included in the mixture based upon the weight of the polyester and monomer.

Pigments also can be included in the formulations of the invention. Typical examples of pigments include carbon blacks, iron oxides, titanium dioxide and phthalocyanines. The pigment can be dispersed into the mixtures prior to extrusion as dry pigment powders or predispersed forms in non-reactive carriers.

Thermoplastic polymeric materials which reduce the shrinkage of the polyester resin formulations during molding also can be included in the formulations used in the method of the invention. These thermoplastic materials produce articles having surfaces of improved smoothness. Examples of useful thermoplastic polymers include homopolymers of ethylene, styrene, vinyl toluene, alkyl methacrylates and alkyl acrylates. Additional examples of thermoplastic polymers are copolymers of: vinyl chloride and vinyl acetate; styrene and acrylonitrile; methyl methacrylate and alkyl esters of acrylic acid; methyl methacrylate and styrene; and methyl methacrylate and acrylamide. Up to about 20% of a thermoplastic polymer can be included in the mixture.

As mentioned above, the polymerization initiator, fillers, fibrous reinforcing materials, pigments, anti-shrink polymers or mold release agents, or mixtures thereof are dispersed into the mixture after the desired increase in viscosity has been attained. It has been found in accordance with the process of this invention that the desired free-flowing pellets are not obtained if these components are added to the polyester resin prior to undergoing a viscosity increase. Since the components are added after the desired viscosity increase, it is necessary to employ high shear mixers to adequately disperse the components in the thickened polyester resin. The useful types of high shear mixers include Banbury mixers, two roll mills, high shear compound screw extruders and similar mixers. The composition is mixed until an adequate dispersion of all of the fillers and other materials is achieved. Generally, this type of mixing results in a significant increase in the temperature of the material being mixed, and this temperature must be maintained below the critical temperatures which would result in decomposition of the polymerization initiators and which would cause premature polymerization of the molding composition. After thoroughly mixing the components in a high shear mixer, the mixture is extruded into granular form using either a screw extruder or a ram extruder equipped with a dry face pelletizing die, the pellets produced being dry, storage-stable, i.e. non-agglomerating and free-flowing. Typical of such extruders are: an NRM 4.5 inch (11.5 cm) Screw Extruder and a 10 inch (25 cm) Barwell Single Ram Extruder. Alternatively, the mixer and extruder can comprise a single unit consisting of an extruder having a mixing zone and an extrusion pelletizing zone. Examples of commercially available continuous mixing extruders are those manufactured by FCM (Farrel Continuous Mixer); Werner Pfleriderer; and Buss-Condux.

The following examples illustrate the process of the invention. Unless otherwise indicated all parts and percentages are by weight.

### Example 1

A commercially available polyester resin comprising one mole of isophthalic acid, 2 moles of maleic anhydride, and 3.1 moles of propylene glycol having a weight average molecular weight of about 2200, an acid number of approximately 25 and a hydroxyl number of about 36 is dissolved in 30 weight percent of styrene monomer. To this polyester:styrene solution is added 1.79% by weight of formamide which is used as a thickening accelerator (available from Rohm & Hass under the general designation CM-201) and 1.7 weight percent of finely divided magnesium oxide powder.

This mixture is allowed to react for about 24 hours at room temperature, and the weight average molecular weight as measured by GPC analysis after this period is found to be about 5,000.

This polyester:styrene mixture of increased viscosity and molecular weight is mixed (23 weight percent) with the following ingredients: 5 weight percent of polyethylene powder (USI FN501), 1.2 weight percent of carbon black pigment (Plasticolors PS-2076); 0.4 weight percent of t-butyl perbenzoate; 1.2% of zinc stearate; 55 weight percent of alumina trihydrate; and 15 weight percent of 1/4 inch (6.4 mm) glass fibers (Certain Teed 19A4A). A Banbury High Shear Mixer is utilized and the mixing is continued until the mixture is sufficiently mixed and a temperature of between 70° and 80°C is obtained. This mixture then is extruded with an NRM Screw Extruder equipped with a dry face pelletizing die. The pellets have approximate dimensions of 0.25 inch length by 0.25 inch diameter (6.4 mm × 6.4 mm). The pellets are allowed to cool to ambient temperature and can be stored indefinitely for use in subsequent molding operations.

### Example 2

Eight hundred lbs (363 kg) of a commercially available styrenated polyester resin available from Ashland Chemical Company under the general trade designation "Aropol 7020" is mixed with 1.6 lbs (.73 kg) of water and 14.64 lbs (6.65 kg) of mesium oxide. The resin comprises 70% alkyd and 30% styrene monomer, the alkyd comprising maleic anhydride, isophthalic acid and propylene glycol. The mixture is blended with a Cowles Mixer until the solution is at 32°C. Before the resin has a sufficient amount of time to react with the magnesium oxide and increase in molecular weight, the mixture is placed into containers to be held for subsequent mixing. The mixture is suitable for use when the molecular weight of the polyester resin has increased to the point where the polyester molecules exhibit entanglement coupling. This entanglement coupling can be monitored by the appearance of a plateau zone of the elastic and loss shear modulii as a function of frequency utilizing a Rheometrics Dynamic Spectrometer.

A sample (42.6 lbs) (19.3 kgs) of the above prepared resin composition exhibiting entanglement coupling is mixed in a No. 3D Banbury (Farrel Corporation) mixer with the following ingredients.

| | |
|---|---|
| t-butyl perbenzoate | 0.6 lbs 0.27 kg |
| zinc stearate | 3.6 lbs 1.6 kg |
| ground alumina trihydrate | 120 lbs 54.5 kg |
| carbon black | 3.2 lbs 1.5 kg |
| 1/4 inch (64 mm) glass fibers | 30.0 lbs 13.6 kg |

Mixing of these ingredients is continued for a time to permit sufficient dispersion of all of the materials into a homogeneous mass while keeping the temperature of the mass below 90°C.

The homogeneous mass is fed into a Farrel 6 inch (15 cm) screw extruder equipped with a Farrell-Bridge pelletizer die. This pellitizer die produces 0.125 inch (3.2 mm) diameter pellets which are useful in compression, transfer and screw injection molding.

### Example 3

The procedure of Example 2 is repeated except that the homogeneous mass is placed into a 10 inch (25 cm) Barwell hydraulic ram extruder. This extruder is equipped with a pelletizer die which produces 1/4 inch (6.4 mm) diameter pellets.

### Example 4

A polyester alkyd (1900 grams) available commercially from Pioneer Plastics under the general trade designation "Pioester 1100" comprising maleic anhydride, isophthalic acid and propylene glycol is melted by heating to a temperature of about 175°C. To this melted polyester resin is added 40 grams of magnesium oxide and 66 grams of water. Although much of the water is converted to steam, the water does initiate the polyester-magnesium oxide interaction. After the magnesium oxide is added, about 15 minutes of mixing is required to produce entanglement coupling of the polyester resin as demonstrated by producing a plateau zone in the elastic and loss shear modulii when plotted against frequency utilizing a Rheometrics Dynamic Spectrometer.

The mixture is cooled to room temperature, and 140 grams of the reaction mixture is mixed on a 2-roll mill with the following ingredients:

| | |
|---|---|
| styrene | 60 grams |
| t-butyl perbenzoate | 3 grams |
| zinc stearate | 10 grams |
| carbon black | 15 grams |
| ground alumina trihydrate | 400 grams |
| 1/4 inch (6.4 mm) glass fibers | 150 grams |

The ingredients are mixed on the mill until there is a sufficient dispersion of all of the ingredients to form a homogeneous mass while keeping the temperature of the mass below 90°C. The homogeneous mass then is converted to 1/4 inch (6.4 mm) diameter pellets.

The curable solid polyester resin pellets prepared in accordance with the invention and the specific examples can be molded and cured to useful articles such as appliance housings and electrical equipment components utilizing injection or transfer or compression molding techniques. Molding and curing pressures and temperatures which are used with other types of curable polyester resin compositions can be used to mold and cure the solid polyester resins of the present invention. Typical molding pressures of about 200 to 2000 psi (1378 to 13788 MPa) and typical temperatures of about 120 to 180°C can be utilized. Specific examples of molded parts which can be prepared from the curable pellets and powders of the invention include electrical circuit breakers, electrical switch gear, and appliance handles.

### Claims

1. A method of preparing heat-curable solid polyester resin compositions which are in dry, free-flowing, storage-stable pellet form and which comprise a mixture of an amorphous unsaturated polyester resin and a cross-linking momomer containing a terminal ethylenically unsaturated group thickened by reaction with an alkaline earth metal oxide or hydroxide and containing a free radical polymerisation initiator, said compositions optionally also containing one or more of the following: a filler, fibrous reinforcement pigment, shrinkage resisting thermoplastics polymer or a mould release agent, characterised by the steps of:

a) adding the alkaline earth metal oxide or hydroxide thickening agent to the polyester resin, or to a mixture of the polyester resin and the cross-linking monomer, to form a liquid composition containing the polyester resin, the thickening agent and, optionally, said cross-linking monomer,

b) allowing the liquid composition thus formed to stand until such time as the polyester resin and thickening agent coreact to provide a thickened liquid composition which is characterised by a plateau region in its viscoelastic spectrum;

c) mixing the polymerisation initiator, optional ingredients, if any, and cross-linking monomer, if not already present, with the thickened liquid composition by high shear blending to provide an extrudable mixture; and

d) extruding the mixture produced in step c), whilst still in the extrudable state, through a pelletizing die.

2. A method according to claim 1, wherein water or an organic thickening agent is added to the composition on step a) in an amount of up to 50% by weight based on the total weight of polyester and cross-linking monomer present in the final composition.

3. A method according to claim 2, wherein the thickening agent added in step a) is formamide.

4. A method according to any one of claims 1—3, wherein, in step a) said liquid composition is formed by dissolving the polyester resin in the cross-linking monomer and adding thereto the alkaline earth metal oxide or hydroxide.

5. A method according to any one of claims 1—3, wherein, in step a), said liquid composition is formed by adding the alkaline earth metal oxide or hydroxide to a liquid polyester resin in the absence of cross-linking monomer, the cross-linking monomer subsequently being added in step c).

6. A method according to claim 5, wherein said liquid polyester resin is a low melting point resin in the molten state.

7. A method according to claim 5 or 6, wherein the alkaline earth metal oxide or hydroxide is added to the polyester resin in an amount of up to 5% by weight based on the weight of the polyester.

8. A method according to claim 4, wherein the liquid composition formed in step a) contains from 1—5% by weight of alkaline earth metal oxide or hydroxide, based on the total weight of the liquid composition.

## Patentansprüche

1. Verfahren zur Herstellung von hitzehärtbaren festen Polyesterharzmassen, die in trockener, freifließender, lagerbeständiger Pelletform vorliegen und ein Gemisch eines amorphen ungesättigten Polyesterharzes und eines vernetzenden, eine endständige äthylenisch ungesättigte Gruppe enthaltenden Monomers umfassen, durch Umsetzung mit einem Erdalkalioxid oder -hydroxid verdickt sind und einen freie Radiale bildenden Polymerisationsinitiator enthalten, wobei die Massen gegebenenfalls auch einen oder mehrere der folgenden Stoffe enthalten: einen Füllstoff, ein faserförmiges Verstärkungspigment, ein schrumpfbeständiges termoplastisches Polymer oder ein Entformungsmittel, gekennzeichnet durch die Stufen, bei denen man:

a) das als Verdickungsmittel verwendete Erdalkalioxid oder -hydroxid zu dem Polyesterharz oder zu einem Gemisch des Polyesterharzes und des vernetzenden Monomers zugibt, um eine Polyesterharz, das Verdickungsmittel und gegebenenfalls das vernetzende Monomer enthaltende flüssige Masse zu bilden,

b) die so gebildete flüssige Masse so lange stehen läßt, bis das Polyesterharz und das Verdickungsmittel miteinander reagieren, um eine verdickte flüssige Masse zu ergeben, die durch einen Plateaubereich in ihrem rheologischen Spektrum gekennzeichnet ist,

c) den Polymerisationsinitiator, gegebenenfalls weitere Bestandteile, wenn solche verwendet werden, und vernetzendes Monomer, wenn es nicht bereits vorhanden ist, mit der eingedickten flüssigen Masse durch Vermengen mit hoher Scherkraft vermischt, um ein extrudierbares Gemisch zu bekommen, und

d) das in Stufe c) erzeugte Gemisch, während es noch im extrudierbaren Zustand ist, durch ein pelletisierendes Mundstück extrudiert.

2. Verfahren nach Anspruch 1, bei dem Wasser oder ein organisches Verdickungsmittel zu der Masse der Stufe a) in einer Menge von bis zu 50 Gewichts-%, bezogen auf des Gesamtgewicht von Polyester und vernetzendem Monomer in der Endmasse, zugesetzt wird.

3. Verfahren nach Anspruch 2, bei dem das in der Stufe a) zugesetzte Verdickungsmittel Formanid ist.

4. Verfahren nach einem der Ansprüche 1 bis 3, bei dem in der Stufe a) die flüssige Masse durch Auflösen des Polyesterharzes in dem vernetzenden Monomer und Zugabe des Erdalkalioxids oder -hydroxids gebildet wird.

5. Verfahren nach einem der Ansprüche 1 bis 4, bei dem in der Stufe a) die flüssige Masse durch Zugabe des Erdalkalioxids oder -hydroxids zu dem flüssigen Polyesterharz in Abwesenheit von vernetzenden Monomer gebildet und das vernetzende Monomer anschließend in der Stufe c) zugesetzt wird.

6. Verfahren nach Anspruch 5. bei dem das flüssige Polyersterharz ein Harz mit niedrigem Schmelzpunkt im geschmolzenen Zustand ist.

7. Verfahren nach Anspruch 5 oder 6, bei dem man das Erdalkalioxid oder -hydroxid zu dem Polyesterharz in einer Menge von bis zu 5 Gewichts-%, bezogen auf das Gewicht des Polyesters, zusetzt.

8. Verfahren nach Anspruch 4, bei dem die in der Stufe a) gebildete flüssige Masse 1 bis 5 Gewichts-% Erdalkalioxid oder -hydroxid, bezogen auf das Gesamtgewicht der flüssigen Masse, enthält.

## Revendications

1. Procédé de préparation de compositions de résine de polyester solide thermodurcissable qui se présentent sous une forme de granulés secs, à écoulement libre, stables au stockage, et qui comprennent un mélange d'une résine de polyester insaturé amorphe et d'un monomère de réticulation contenant un groupe terminal à insaturation éthylénique, épaissi par une réaction avec un oxyde ou un hydroxyde de métal alcalinoterreux et contenant un initiateur de polymérisation de radicaux libres, ces compositions contenant aussi, facultativement un ou plusieurs des produits suivants: une charge, un pigment de renforcement fibreux, un polymère thermoplastique résistant au retrait ou un agent de démoulage, caractérisé en ce qu'il comprend les étapes de:

a) ajouter l'agent épaississant oxyde ou hydroxyde de métal alcalino-terreux à la résine de polyester ou à un mélange de la résine de polyester et du monomère de réticulation, pour former une composition liquide contenant la résine de polyester, l'agent épaississant et, facultativement, ledit monomère de réticulation;

b) permettre à la composition liquide ainsi formée de reposer jusqu'au moment où la résine de polyester et l'agent épaississant co-réagissant pour créer une composition liquide épaissie qui est caractérisée par une zone en palier dans son spectra de viscoélasticité;

c) mélanger l'initiateur de polymérisation, les ingrédients facultatifs, s'il y en a, et le monomère de réticulation, s'il n'est pas déjà présent, à la composition liquide épaissie, par mélange sous cisaillement élevé pour créer un mélange extrudable; et

d) extruder le mélange obtenu dans l'étape c), tandis qu'il est toujours à l'état extrudable, à travers une filière de granulation.

2. Procédé selon la revendication 1, dans lequel on ajoute de l'eau ou un agent épaississant organique à la composition de l'étape a) en une quantité allant jusqu'à 5% en poids sur la base du poids total du polyester et du monomère de réticulation présent dans la composition finie.

3. Procédé selon la revendication 2, dans lequel l'agent épaississant ajouté dans l'étape a) est le formamide.

4. Procédé selon l'une quelconque des revendications 1 à 3, dans lequel, dans l'étape a), ladite composition liquide est formée par dissolution de la résine de polyester dans le monomère de réticulation et adjonction, à elle, de l'oxyde ou de l'hydroxyde de métal alcalino-terreux.

5. Procédé selon l'une quelconque des revendications 1 à 3, dans lequel, dans l'étape a), on forme ladite composition liquide en ajoutant l'oxyde ou l'hydroxyde de métal alcalino-terreux à une résine de polyester liquide en l'absence de monomère de réticulation, le monomère de réticulation étant ajouté ensuite dans l'étape c).

6. Procédé selon la revendication 5, dans lequel ladite résine de polyester liquide est une résine à bas point de fusion, à l'état fondu.

7. Procédé selon la revendication 5 ou 6, dans lequel l'oxyde ou l'hydroxyde de métal alcalino-terreux est ajouté à la résine de polyester en une quantité allant jusqu'à 5 % en poids sur la base du poids du polyester.

8. Procédé selon la revendication 4, dans lequel la composition liquide formée dans l'étape a) contient de 1 à 5 % en poids de l'oxyde ou de l'hydroxyde de métal alcalino-terreux sur la base du poids total de la composition liquide.